# EUROPEAN PATENT APPLICATION

(11) **EP 4 002 202 A1**
(43) Date of publication of application: **25.05.2022**
(21) Application number: 21209472.6
(22) Date of filing: 22.11.2021
(51) Int. Cl.: G06K 9/00, G06V 30/142, G06V 40/30, G06V 30/32

(54) **RECOGNITION SYSTEM AND MANAGEMENT PROCEDURE FOR GRAPHOMETRIC DIGITAL SIGNATURES**

(30) Priority: 20.11.2020 IT 202000027870
(71) Applicant: Bucap S.p.A., 00165 Roma (IT); Sis.Ter. Pomos S.r.l., 04100 Latina (IT)
(72) Inventor: RIZZI, Antonello, ROMA (IT); Di Pastena, Tiziano, ROMA (IT)
(74) Representative: Lunati & Mazzoni S.r.L.

(57) **Abstract**

It is provided a procedure (I) for managing a digital signature comprising a registration step of at least a first handwritten signature (11') of a user including acquiring (II) from the user a plurality of first digital signatures (12) derived from first handwritten signatures (11) and a plurality of first biometric data (13) associated with the first handwritten signatures (11); execute (III) a computer program configured to compare the first digital signatures (12) and discretize the first digital signatures (12) into a plurality of first fragments (12a) to which one or more first biometric data are associated with each one (13 ) recurring among the first digital signatures (12) within predetermined tolerances; correlating (IV), through the program, each first fragment (12a) to respective one or more first biometric data (13) defining first correlated data (14); sequentially translate (V) the first correlated data (14) into a reference code (15) on the basis of a predetermined logic in such a way as to define digital data (10), recording (VI) the digital data (10) on a first storage support (2) in such a way that the first related data (14) cannot be viewed starting from the first support (2), associating (VII) on the first support (2) an identification code (ID) of said user to the digital data (10).

## Description

The present invention relates to a recognition system and procedure for managing digital graphometric signatures of the type specified in the preamble of the first claim.

In particular, the present invention relates to a system for managing a digitized handwritten signature using biometric parameters detectable by conventional electronic devices, such as smartphones, tablets, graphics tables, computers or more, which at least provides for the acquisition of the signature and subsequent recognition.

As is known, the systems and procedures for the management, in particular for recognition, of digitized handwritten signatures have evolved considerably over time. In particular, among the technologies used for the correct detection and reprocessing of the biometric data relating to the handwritten signature, there are reading techniques, by points, of various characteristic parameters of the signature itself.

Examples of known techniques are currently described in documents CN-A-104462909, US-A-5802200 and US-A-2007292002.

These techniques basically provide for the analysis of the shapes after breaking them down into nodes. At the same time, the nodes are subdivided on the basis of a plurality of possible parameters that can favour the analysis of the differences between the various signatures.

Among the various parameters, the characteristics considered may include: position in the two-dimensional space of the node in question, time interval of arrival at the node with respect to the start of the creation of the signature, inclination of the means used for the creation of the signature at the node, pressure exerted locally at the node and any other parameters that are substantially derivable from other global parameters, for example the distances calculated between the nodes, such as the speed of the writing medium and / or the local accelerations to which the medium is subjected.

In any case, all the aforementioned parameters substantially allow the digital signature to be encoded in a plurality of individual elements, or rather the nodes, each characterized by its own parameters and capable of allowing the various digital signatures to be compared and possibly reconstructed.

The known technique described includes some important drawbacks.

In particular, digital signatures are substantially always saved on archiving servers as they are processed and, therefore, if the server is subject to unauthorized access, it is possible to trace each recorded digital signature simply by reconstructing the signatures starting from the characteristics of the nodes.

Of course, especially nowadays, this inconvenience is of vital importance for the protection of personal data, such as the signature, in the face of hacking activities unfortunately increasingly widespread.

Furthermore, the techniques described are severely dependent on the acquisition medium that is used. However, as is well known, it is not at all obvious that all conventional media used for signature acquisition are equipped with the same sensors or in any case with detectors capable of detecting all the required parameters.

Therefore, even in this case it cannot always be guaranteed an optimal safety or efficiency for any conventional device.

In this situation, the technical task underlying the present invention is to devise a recognition system and procedure for managing digital graphometric signatures capable of substantially obviating at least part of the aforementioned drawbacks. Within the scope of said technical task, it is an important object of the invention to obtain a system and a procedure for managing a digital signature which allows to guarantee high levels of security. In this sense, it is a task of the invention to severely limit the possibility, in the event of hacking, of tracing the original digital signature starting from the information recorded on the archive servers.

Another important object of the invention is to provide a system and a procedure for managing a digital signature that can be used with full effectiveness and safety on a wide range of conventional electronic devices such as, for example, smartphones, tablets, graphic tables, computers or even more.

The technical task and the specified aims are achieved by a system, and relative procedure, for managing a digital signature as claimed in the attached claim 1. Preferred technical solutions are highlighted in the dependent claims.

The characteristics and advantages of the invention are clarified below by the detailed description of preferred embodiments of the invention, with reference to the accompanying drawings, in which:

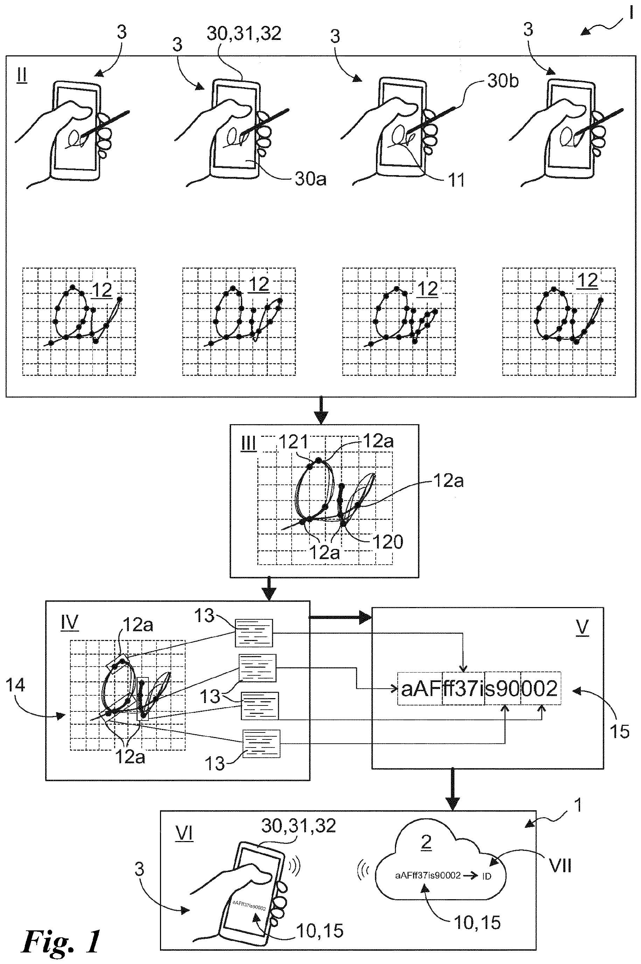

the **Fig. 1** shows a simplified diagram of the registration phase of a system and the management procedure of a digital signature according to the invention; and

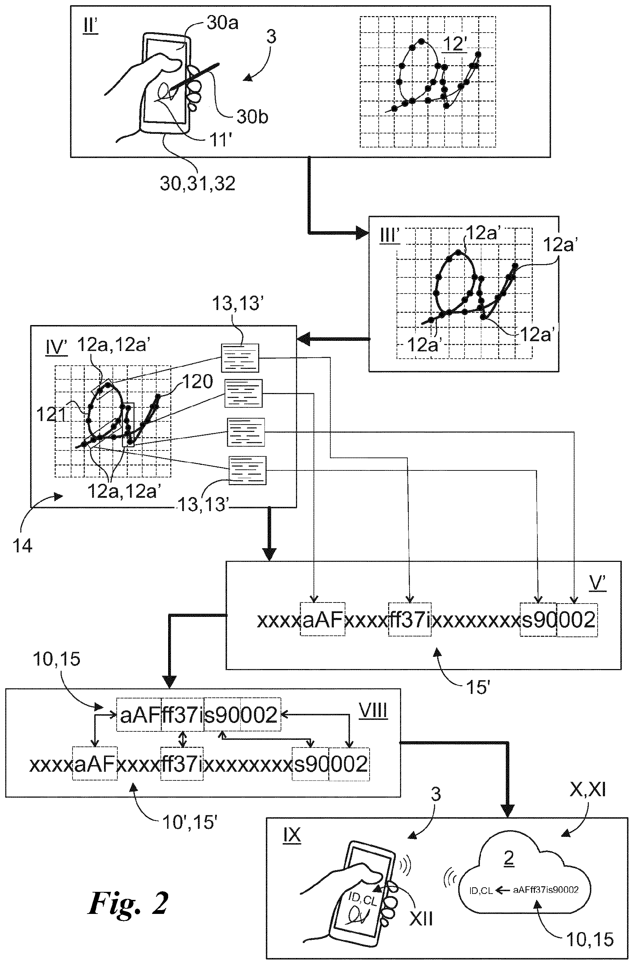

the **Fig. 2** illustrates a simplified diagram of the recognition phase of a system and the management procedure of a digital signature according to the invention.

In the present document, the measurements, values, shapes and geometric references (such as perpendicularity and parallelism), when associated with words like "about" or other similar terms such as "approximately" or "substantially", are to be considered as except for measurement errors or inaccuracies due to production and/or manufacturing errors, and, above all, except for a slight divergence from the value, measurements, shape, or geometric reference with which it is associated. For instance, these terms, if associated with a value, preferably indicate a divergence of not more than 10% of the value.

Moreover, when used, terms such as "first", "second", "higher", "lower", "main" and "secondary" do not necessarily identify an order, a priority of relationship or a relative position, but can simply be used to clearly distinguish between their different components.

Unless otherwise specified, as results in the following discussions, terms such as "treatment", "computing", "determination", "calculation", or similar, refer to the action and/or processes of a computer or similar electronic calculation device that manipulates and/or transforms data represented as physical, such as electronic quantities of registers of a computer system and/or memories in, other data similarly represented as physical quantities within computer systems, registers or other storage, transmission or information displaying devices.

The measurements and data reported in this text are to be considered, unless otherwise indicated, as performed in the International Standard Atmosphere ICAO (ISO 2533:1975).

With reference to the Figures, the system for managing a digital signature according to the invention is globally indicated with the number **1.**

The management system is basically capable of allowing at least the secure registration of a digitized signature. Furthermore, the management system is preferably adapted to allow the recognition of the registered digital signatures.

Therefore, the system 1 comprises at least a first storage support **2.**

The first support 2 is substantially configured to store digital data **10, 10** '.

The digital data 10,10' are substantially initially data of any nature, for example analogical, digitized, i.e., converted into a coded language which can be processed by means of, for example, computerized devices.

Therefore, the first support 2 can include a physical memory, for example a hard disk or a solid state storage unit. Or, even more advantageously, the first support 2 can include one or more servers accessible remotely.

The system 1 therefore also includes an electronic processor **3.**

The processor 3 is substantially an electronic device capable of processing at least the digital data 10. Furthermore, in particular, the device 3 is preferably adapted to allow interaction between a user and the system 1.

Therefore, the processor 3 can include one of your choices between a smartphone, a tablet, a graphic table and a computer.

In any case, preferably, the processor 3 comprises acquisition means **30.**

The acquisition means 30 are configured to acquire at least one digital signature **12, 12'** derived from a handwritten signature **11,11'.**

The digital signature 12, 12 'is basically the digital version of a handwritten signature 11, 11'. Therefore, the digital signature 12, 12' is a signature that can be read and/or processed by the computer 3 and encoded in the language of the computer, or digitized.

The handwritten signature 11,11' is basically a signature made directly, by hand, by the user. Therefore, it can be a signature made on a sheet, or a signature made on a particular medium.

Preferably, the acquisition means 30 comprise a writing plane **30a.**

The writing plane 30a is substantially a plane on which the user can move an object to make the handwritten signature 11, 11'.

The writing plane 30a can therefore be implemented by the computer 3.

In this sense, the latter can comprise a tactile screen.

The tactile screen, or touch screen, is substantially a screen adapted to receive data, for example, of pressure produced on the screen itself. Therefore, the touch screen can define the writing plane 30a.

Furthermore, the acquisition means 30 can include a writing means **30b.**

The writing means 30b is preferably an element adapted to allow to realize the handwritten signature 11, 11 'on the writing surface 30a with precision. Therefore, the writing medium 30b can be a stylus.

In this case, therefore, the digital signature 12, 12' corresponds to the direct conversion of the handwritten signature 11, 11' carried out manually by the user. Naturally, the acquisition of the digital signature 12, 12' derived from the handwritten signature 11, 11' could be carried out in a different way.

For example, the handwritten signature 11, 11' could be made on an external sheet and the acquisition means 30 could include a camera able to immortalize the handwritten signature 11, 11' and, therefore, acquire it in the form of a digital image, thus converting it into the signature digital 12, 12'.

Furthermore, the acquisition means 30 could allow the reception of the handwritten signature 11, 11' from other transmission means, for example connections of various kinds, in various digital formats. Therefore, in this sense, the handwritten signature 11, 11ì could already have been digitized into the digital signature 12, 12' outside the system 1 and forwarded, already in digital format, to the system 1. In this case, the acquisition means 30 could include simple means of connection.

The acquisition means 30 are also configured to acquire a plurality of biometric data **13,13'** associated with the handwritten signature 11,11'.

The biometric data 13, 13 'are preferably also digitized and substantially correspond to characteristics determined during the making of the handwritten signature. These characteristics can be physical, for example corresponding to the pressure exerted by the user on the writing surface 30a during the writing phase, or to the inclination of the writing means 30b.

The biometric data 13, 13 'are therefore acquired step by step by the acquisition means 30, or they can be previously received by external sensor means and received by the acquisition means 30.

In fact, it is not essential that the acquisition means 30 they can physically receive the biometric data 13, 13', but it is sufficient that the acquisition means 30 can receive the biometric data 13, 13'.

Naturally, the biometric data 13, 13 'are preferably discrete data referred to various singular points of the digital signature 12, 12' and detected during the time in which the handwritten signature 11, 11 ', and therefore the digital signature 12, 12', was made.

Preferably, in the preferred embodiment in which the acquisition means 30 comprise the writing plane 30a and the writing means 30b, each of the acquired biometric data 13 includes one or more chosen from a position parameter on the writing plane 30a, a time parameter comprised between the beginning and end of acquisition of the handwritten signature 11, 11', a pressure parameter exerted by the writing means 30b on the writing surface 30a during the making of the handwritten signature 11 and an inclination parameter of the writing means 30b with respect to the writing surface 30a.

The processor 3 therefore also comprises a second storage support **31.**

The second storage support 31 may include a physical memory, for example a hard disk or a solid state storage unit. Or, even more advantageously, the second support 31 can include a physical memory and a volatile memory adapted to allow the temporary recording of manipulated and/or manipulable data.

In particular, in fact, the second support 31 includes a computer program which can be executed by the computer 3. The program is substantially a predetermined algorithm suitable for determining the manipulation methods of the digital signature 12, 12'.

Even more in detail, the computer program 31 can comprise algorithms recorded on it by installation from a computer or smartphone, for example in the form of an application.

The computer program is preferably configured to discretize the digital signature 12, 12' into a plurality of fragments **12a, 12a'.**

The fragments 12a, 12a' are substantially parts of the digital signature 12. Therefore, the program substantially divides the digital signature 12a, 12a' into mutually separate portions defined by their own characteristics.

The fragments 12a, 12a' can be discretized in various portions. For example, the fragments 12a, 12' may include a discrete point **120.**

The discrete point 120 is substantially the lesser of the units into which the digital signature 12, 12' can be divided and can in fact consist of a simple dot.

The digital signature 12, 12' can therefore be formed by a set of dots arranged in an orderly manner according to the sign created by the handwritten signature 11, 11'. Furthermore, the fragments 12a, 12a' can also comprise a section **121.**

The section 121 can substantially consist of a line or a segment determined by the digital signature 12, 12'. Therefore, the section 121 can include a plurality of discrete points 120 consecutively arranged.

In general, the fragments 12a, 12a 'comprise one or more chosen between a discrete point 120 and a stretch 121 of the digital signature 12, 12'.

Furthermore, one or more biometric data 13, 13 'as previously described are associated with each of the fragments 12a, 12a'.

The computer program is, therefore, configured to manipulate and process the fragments 12a, 12a' and the biometric data 13, 13' respectively associated to define the digital data 10, 10', as described in more detail below.

Preferably, the processor 3 also comprises connection means **32.**

The connection means 32 are preferably configured to operatively connect the processor 3 and the first support 2. Furthermore, the connection means 32 are configured to forward the digital data 10, 10' to the first support 2 from the computer 3.

Naturally, preferably the connection means 32 also allow the processor 3 to display and process the digital data 10, 10' on the first support 2.

These connection means 32 are preferably wireless connectors configured to allow connection without wiring through the first support 2 and the computer 3.

The operation of the system 1 previously described in structural terms determines a new procedure I for the management of a digital signature 12, 12'.

Procedure I comprises at least a step of registering a first handwritten signature 11 of a user.

Basically, in the registration phase, the system 1 acknowledges the first handwritten signature 11.

In this regard, preferably, the registration in turn includes a plurality of sub-phases.

Preferably, procedure I, and in particular the registration phase, comprises an acquisition phase **II**.

In the acquisition phase I, a plurality of first digital signatures 12 are acquired by the user. The first digital signatures 12 are derived from first handwritten signatures 11. Naturally, as previously explained, the system 1 can allow the acquisition of the first digital signatures. 12 in different ways.

Furthermore, in the acquisition phase II a plurality of first biometric data 13 associated with the first handwritten signature 11 is acquired.

The registration also includes an execution phase **III.** In execution phase III the computer program is essentially executed. Implementation Phase III can basically define a training phase of the program. In particular, the computer program recorded on the second support 31 is executed.

The computer program is, therefore, configured to compare the first digital signatures 12. The first digital signatures 12 can simply be compared by overlapping. For example, if the first digital signatures 12 have been acquired from the same writing plane 30a, it is possible simply to superimpose the various virtual writing planes 30a so as to be able to compare the first digital signatures 12 in the same space.

The program also discretizes the first digital signatures 12 into a plurality of first fragments 12a. One or more first biometric data 13 recurring among the first digital signatures 12 within predetermined tolerances are associated with each of the first fragments 12a.

Basically, the program searches for the similarities between the various first digital signatures 12, dividing the latter into portions, for example discrete points 120 or sections 121, and comparing for each corresponding first fragment 12a the respective first biometric data 13 in such a way as to determine which biometric data 13 are recurring, i.e. substantially identical or similar according to predetermined tolerances.

Naturally, if some first fragments 12a of various first signatures 12 include non-comparable first biometric data 13, such first fragments 12a are preferably discarded by the program or not considered as relevant.

In fact, it is clear that a handwritten signature 11, 11 'cannot, in general, always be identical, but can generally have some similar parts and other variables.

Basically, the program discretizes the first digital signatures 12 into relevant first fragments 12a and neglects the other parts of the first digital signature 12.

Such comparison and discretization activities are, in any case, widely known in the current state of the art. In fact, known techniques can be provided for carrying out the execution phase III.

For example, the comparison and discretization can advantageously be carried out on the basis of clustering logics implemented in granular computing techniques, in particular through the symbolic histogram approach.

According to these logics, substantially, of each first fragment 12a, including points 120 or sections 121, recurring and defining a recurring sub-sequence, a sort of mean, of representative sub-sequence, is calculated which defines a characteristic symbol of the user. With this procedure, therefore, the first digital signatures 12 deposited by the user are transformed and stored in the form of a set of symbols defined by the set of points 120 and section 121 included in the first recurring fragments 12a.

Even more advantageously, the program is also configured to carry out other actions.

Indeed, the registration includes a correlation phase **IV.**

In the correlation phase IV, each of the first fragments 12a and of the respective first biometric data 13 defines first correlated data **14.**

The first correlated data 14 are substantially data packets which define, in discrete points or zones of the first digital signature 12, all the characteristics of the single first fragment 12a as being acquirable.

In addition, the recording comprises a translation phase **V.**

Advantageously, in the translation step V, the first correlated data 14 are translated into a first reference code **15.**

The first reference code 15 is an identification element which represents the first correlated data 14 that make up the first digital signature 12. The reference code 15 can therefore be of various kinds. For example, it can be determined as an alpha-numeric code. Or, it can be of the graphic-symbolic type, for example including symbolic histograms representing the various first correlated data 14 in sequence. In any case, the program translates the first correlated data 14 on the basis of predetermined logics, that is, pre-set within the program itself.

An example of predetermined translation logic can be made as follows.

Given the set of symbols given by the first recurring fragments 12a determined in execution phase III, i.e., in the training phase, system 1 calculates an alphanumeric vector in which the information of how many and which symbols appear in the handwritten signatures 11 is encoded, establishing the correspondence on the basis of appropriate pre-calculated thresholds, through genetic algorithms, during the training phase. This alphanumeric code can trivially correspond to a vector of integers representing the count of symbols of first fragments 12a recurring in the various handwritten signatures 11.

For example, the digital signature 12 can be discretized into consecutive fragments 12a and indexed with sequential letters. Therefore, in each fragment 12a there may be present a plurality of points 120 and/or sections 121 defining the recurring symbols.

If among the various first digital signatures 12 are recognized, for example, 3 points 120 and/or 121 recurring sections, in the first fragment 12a and 5 points 120 and/or 121 recurring sections in the second fragment 12a, an example of a first reference code 15 correspondent could be realized as *a3b5.*

Naturally this is just one example of coding logic.

The first reference code 15, therefore, substantially defines the first digital data 10. The procedure I therefore provides for a storage step **VI.**

In the storage phase VI the first digital data 10, i.e. the first reference code 15, are stored on the first support 2.

However, only the first digital data 10, i.e. the first reference code 15, of the first digital signature 12 being stored, the first correlated data 14, advantageously, are not viewable starting from the first support 2.

This means that, if an external device tries to access the first support 2 to collect information on the first digital signatures 12 stored therein, it cannot determine actual information about the first digital signatures 12, but only symbolic information that is difficult to interpret in the absence of the mediation of the computer program. In conclusion, the registration preferably includes an association phase **VII.**

In association phase VII, preferably, it is associated with the first digital data 10 on the first support 2 an identification code **ID** of the user.

The identification code ID can be of any type, for example even a simple serial number.

The association can, again, be carried out by the computer 3 through the computer program.

Preferably, procedure I can also include a step of recognizing a second handwritten signature 11' of the user, or even of another user.

In particular, procedure I can include, in the recognition phase, a plurality of phases already provided for in the registration phase and carried out on a second digital signature 12' in the same manner provided for the first digital signature 12. Preferably, in fact, the recognition it includes at least an acquisition step **II'** in which a second digital signature 12' derived from the second handwritten signature 11' and a plurality of second biometric data 13' associated with the second handwritten signature 11' are acquired.

Furthermore, the recognition can include an execution step **III'** of the computer program for discretising the second digital signature 12' into a plurality of second fragments 12a' to which one or more second biometric data 13' are associated with each one within predetermined tolerances.

Furthermore, the recognition preferably includes a correlation step **IV'** in which, through the program, each second fragment 12a' is correlated to respective one or more second biometric data 13 'defining second correlated data **14'.**

Then, the second correlated data 14' are also translated, in a translation step **V',** sequentially into a second reference code **15'.** The second reference code 15' is also generated on the basis of a predetermined logic in such a way as to define second digital data 10'.

The predetermined logic can, of course, be any.

Also, in this case the system 1 preferably calculates an alphanumeric vector in which the information of how many and which symbols appear in the second handwritten signatures 11' is encoded. This same alphanumeric code can still correspond to a vector of integers representing the count of symbols S in the second handwritten signatures 11'.

Advantageously, the recognition also comprises a comparison step **VIII.**

In the comparison step, substantially the second digital data 10' are compared with the first digital data 10 in such a way as to determine a correspondence between the first digital signature 12 and the second digital signature 12' within predetermined tolerances.

Basically, the comparison can take place by evaluating whether there are common parts within the code, possibly arranged in the same position as the digital signature 12, 12', i.e. corresponding to the same fragments 12a, 12a'. The comparison VIII, in particular, is preferably carried out by comparing the reference codes 15, 15 ', ie, the differences and the correspondence, within predetermined thresholds, between them.

Considering the example described above, if the first reference code 15 is given by *a3b5* and the second reference code 15' is given by *a2b4,* the correspondence can be agreed. Otherwise, if the second reference code 15' is given by *a1b0* then the correspondence may not be matched.

In this example, a tolerance can be substantially defined between the quantities of points 120 and/or corresponding portions 121 of the various fragments 12a considering as acceptable a difference equal to 1 on a single fragment 12a. Hence, the recognition may include an extrapolation phase **IX.**

In the extrapolation phase, the identification code of the user is substantially recalled if the digital signatures 12, 12' match, i.e. if the correspondence between the digital data 10, 10' or between the reference codes 15, 15' has been positively evaluated .

In addition, procedure I may include further steps.

For example, in particular preferably in the recognition phase, the procedure I may include a classification sub-phase of **X.**

In the classification phase X, preferably, the second digital data 10' are classified with respect to the first digital data 10 on the basis of a predetermined scale defining a degree of correspondence in such a way as to generate a correspondence datum **CL** including at least said degree of correspondence;

The correspondence datum CL is substantially an indicator of the quality of the recognition carried out by procedure I. For example, comparing the reference codes 15, 15' if all the first reference code 15 is confirmed in the second reference code 15' the match CL can define a high degree of match. Therefore, if instead the first reference code 15 finds only partial confirmation, i.e., correspondence, in the second reference code 15', then the correspondence datum CL represents a more reduced degree of correspondence.

The classification can be carried out, for example, with the K-NN or k-Nearest Neighbors technique, to calculate the degree of agreement between the information deposited by the user with the first digital signatures 12 and the second digital signatures 12' to be recognized.

The procedure is based on a reliability threshold, preferably determined in the training phase by processing the first digital signatures 12 and preferably continuously updated by the system to keep track of the natural evolution over time of the second digital signatures 12', deriving from the second handwritten signatures 11', of the user.

So the procedure may include an update phase.

The update substantially provides for the execution of the registration phase on the basis of the second digital signatures 12'. Therefore, the updating phase is used to update and enrich the set of symbols S, or fragments 12a, 12a', characteristic of the user, exploiting the new digital signatures 12' affixed by the user which have been accepted during the recognition phase.

For a new digital signature date 12', if the match exceeds this threshold the user is recognized, otherwise the user is asked to repeat the signature registration procedure. After a certain number of failed attempts, system 1 may also block the user, signalling a possible attempt to violate the biometric access mechanism.

Procedure I can therefore include an attachment phase **XI.**

In the attachment phase XI, the correspondence data CL is attached to the identification code ID. This latter aspect is especially important when the first support 2 comprises a plurality of digital data 10 referring to different identification codes ID of users whose digital signatures 12 may have similarities.

In conclusion, Procedure I may include a notification phase **XII.**

In the notification phase XII, the identification code ID and the correspondence data CL are notified to the user via device 3.

Naturally, procedure I has been described taking for example the simplest case in which a user registers his first signature digital signature 12 realized a plurality of first handwritten signatures 11 and in which the same user evaluates the correspondence of his own second digital signature 12' starting from a second handwritten signature 11' with respect to the first digital signature 12.

However, procedure I allows to creating a database on the first support 21 which includes a plurality of digital data 10 of different users and, therefore, procedure I allows to register an unlimited number of digital signatures 12, in the form of digital data 10, for an unlimited number of users and allows moreover, to realize the recognition of second digital signatures 12' of any user with respect to the entire database.

In this sense, the computer program can simply implement the recognition step for each digital data 10 recorded on the first support 2.

The system 1 and the procedure I for managing a digital signature according to the invention achieve important advantages.

In fact, system 1 and procedure I make it possible to guarantee high levels of safety. In fact, they severely limit the possibility, in the event of hacking, of tracing the original digital signature starting from the information recorded on the archive servers, since the digital data 10 only include reference codes 15 which, as described, are exclusively symbolic.

Furthermore, system 1 and procedure I do not use complex logics and, therefore, can be used with full effectiveness and safety on a wide range of conventional electronic devices such as, for example, smartphones, tablets, graphic tables, computers or others.

The invention is susceptible of variants falling within the scope of the inventive concept defined by the claims.

In this context, all the details can be replaced by equivalent elements and the materials, shapes and dimensions can be any.

## Claims

1. Procedure (I) for managing a digital signature comprising a registration phase of at least one first handwritten signature (11) of a user including:
- acquiring (II) from said user a plurality of first digital signatures (12) derived from said first handwritten signatures (11) and a plurality of first biometric data (13) associated with said first handwritten signatures (11);
- execute (III) a computer program configured to compare said first digital signatures (12) and discretize said first digital signatures (12) into a plurality of first fragments (12a) to which one or more of said first biometric data (13) are associated with, recurring between said first digital signatures (12) within predetermined tolerances; and **characterized by** that comprises:
- correlating (IV), through said program, each first fragment (12a) to said respective one or more first biometric data (13) defining first correlated data (14);
- translating (V) sequentially said first correlated data (14) into a first reference code (15) on the basis of a predetermined logic in such a way as to define digital data (10);
- storing (VI) said digital data (10) on a first storage support (2) in such a way that said first correlated data (14) cannot be viewed starting from said first support (2);
- associating (VII) on said first support (2) an identification code (ID) of said user to said first digital data (10).

2. Procedure according to any one of the preceding claims, comprising a phase of recognition of a second handwritten signature (11') of said user including:
- acquiring (II') a second digital signature (12') derived from said second handwritten signature (11') and a plurality of second biometric data (13') associated with said second handwritten signature (11');
- execute (III') a computer program configured to discretize said second digital signature (12') into a plurality of second fragments (12a') to which one or more of said second biometric data (13') are associated with each predetermined tolerances;
- correlating (IV'), through said program, each said second fragment (12a') to said respective one or more of said second biometric data (13') defining second correlated data (14');
- translating (V') sequentially said second correlated data (14') into a second reference code (15 ') on the basis of a predetermined logic in such a way as to define second digital data (10');
- comparing (VIII) said second digital data (10') with said first digital data (10) in such a way as to determine a correspondence between said first digital signature (12) and said second digital signature (12') within predetermined tolerances;
- extrapolate (IX) said identification code (ID) if said digital signatures (12,12') match.

3. Procedure according to claim 2, comprising:
- classifying (X) said second digital data (10') with respect to said first digital data (10) on the basis of a predetermined scale defining a degree of correspondence so as to generate a data correspondence (CL) including at least said degree of correspondence;
- attach (XI) said correspondence data (CL) to said identification code (ID).

4. Procedure according to claim 3, comprising notifying (XII) through said device (3) said identification code (ID) and said correspondence data (CL) to said second user.

5. Procedure according to claim 1, wherein said acquisition is carried out with acquisition means (30) including at least a writing plane (30a) and a writing mean (30b) and each of said first biometric data (13, 13') acquired includes one or more chosen from a position parameter on said writing plane (30a), a time parameter between the beginning and end of acquisition of said handwritten signature (11, 11'), a pressure parameter exerted by said means (30b) on said writing plane (30a) during the making of said handwritten signature (11,11') and an inclination parameter of said writing means (30b) with respect to said writing plane (30a).

6. Procedure according to any one of the preceding claims, wherein said fragments (12a, 12a') comprise one or more chosen between a discrete point (120) and a section (121) of said digital signature (12, 12').

7. Procedure according to any one of the preceding claims, wherein said reference code (15, 15') is alpha-numeric and/or graphic-symbolic.

8. Procedure according to any one of the preceding claims, wherein said comparison and said discretization are carried out on the basis of clustering logics implemented in granular computing techniques.

9. Procedure according to any one of claims 2-8, comprising at least one updating phase comprising at least one registration phase of said second handwritten signature (11 ').

10. System (1) for managing a digital signature comprising:
- a first storage support (2) configured to store digital data (10),
- an electronic processor (3) including:
- acquisition means (30) including at least a writing plane (30a) and a writing mean (30b) and configured to acquire at least one digital signature (12,12') derived from a handwritten signature (11,11') and a plurality of biometric data (13,13') associated with said handwritten signature (11,11'),
- a second storage support (31) including a computer program executable by said processor (3) and configured at least to discretize said digital signature (12,12') in a plurality of fragments (12a, 12a') to which each are associated with one or more of said biometric data (13,13a'),
- connection means (32) configured to operatively connect said processor (3) to said first support (2) and forward said digital data (10,10') to said first support (2) from said processor (3),
and **characterized by** that
- said computer program is configured to correlate each fragment (12a, 12a') to said respective one or more biometric data (13,13') realizing correlated data (14,14') and sequentially translate said correlated data (14,14') into a reference code (15,15') on the basis of a predetermined logic in such a way as to define said digital data (10,10'),
and by the fact that
- said correlated data (14,14') cannot be displayed starting from said first support (2).

11. System (1) according to claim 9, wherein said first support (2) storage includes one or more remotely accessible server and said computer (3) includes a choice between a smartphone, a tablet, a graphics tablet and a computer and comprising a tactile screen defining said writing surface (30a) and a pen defining said writing means (30b).
